# EUROPEAN PATENT SPECIFICATION

(11) **EP 2 402 230 B1**
(45) Date of publication and mention of the grant of the patent: **15.05.2013**
(21) Application number: 10167745.8
(22) Date of filing: 29.06.2010
(51) Int. Cl.: B62B 3/06, B66F 9/18

(54) **Industrial truck comprising a load stopping device**
Flurförderzeug mit Ladungsstoppvorrichtung
Chariot industriel comportant un dispositif d'arrêt de chargement

(43) Date of publication of application: 04.01.2012
(73) Proprietor: BT Products AB, 595 81 Mjölby (SE)
(72) Inventor: Arvidsson, Jakob, 595 51, Mjölby (SE)
(74) Representative: Rasch, Teija Kaarina

(56) References cited:
- EP-A1- 1 655 262
- DE-A1- 10 159 538
- US-A- 3 633 778
- US-B1- 6 655 900
- US-B1- 6 764 269

## Description

### TECHNICAL FIELD

The present application relates to the field of industrial trucks such that described in the preamble of claim 1. It relates also to load stopping devices of industrial trucks such as described in claim 13. The invention also relates to a method of modifying an industrial truck such as described in claim 14.

### BACKGROUND ART

It is known in the art to use arms to secure a load on an industrial truck. In EP 1 655 262 A1 a load holding device for an industrial truck is disclosed. The load holding device can clamp a load on the sides by letting two load holding elements to move towards and away from one another by adjustment means. The said adjustment means are constituted of hydraulic pistons that are incorporated into the shaft.

The above load holding device has a relatively complicated hydraulic mechanism for controlling the two load holding elements. This results in higher costs. Even though the arms due to the hydraulics can easily be adapted for different sizes of loads and stored by the said hydraulics, they require the explicit manoeuvring of the operator of the industrial truck. This in turn leads to lost time for an operator that together with the usual operations of lifting and loading must add another operation, i.e. that of manoeuvring the load holding elements.

The document US 6,764,269 B1 describes a frame apparatus which is positionable on the tines of a forklift, as defined in the preamble of claim 1. The apparatus provides first and second bar members that can attain a down position and an up position for accommodation of different sized loads.

It is therefore an object of the following invention to remedy the drawbacks of the prior art.

### SUMMARY OF THE INVENTION

This goal is achieved by providing an industrial truck as defined in claim 1, comprising a load stopping device comprising a first pivotal arm, wherein said arm is pivotal between a storing position and an engaging position, when said first arm is folded to its engaging position it can protrude along the side wall of a load wherein it provides a stop, at a stop position for a load movement in one lateral direction of said load stopping device characterized in that the arm is arranged such that it from its engagement position can be pushed by said load to its storing position, the industrial truck comprises a load stopping device comprising a second pivotal arm with essentially the same characteristics as the first arm, wherein the second arm is arranged laterally displaced in relation to said first arm arranged on said load stopping device, wherein said second arm is arranged such that a second stop position is provided on the same side of a load as the first arm's stop position, wherein an adjusted stop position is enable. By lateral is meant direction which runs essentially perpendicularly from direction of the forks of the industrial truck. The storing position should be understood as a position where the arm cannot provide a stop in the lateral direction.

One advantage of this arrangement is that the arm provides a simple adjustment of its position, without any powering or mechanical means.

Another advantage of this arrangement is that adjusted stop positions on a lateral side of a load are easily provided. And the arrangement is also cost effective and less complicated than the prior art devices.

According to another aspect of the invention the load stopping device is provided with a plurality of arms such that adjustment of the stop position in the lateral direction can be finely tuned, by enabling a plurality of stop positions

According to another aspect of the invention the load stopping device is provided with arms positioned such that a first side a can be laterally stopped at a first stop position and a second side of a load, laterally distant from said first side, can be stopped at a stop position in the opposite lateral direction. This has the advantage that a load is stopped from movement in both lateral directions.

According to another aspect of the invention the arms are hinged upon a horizontal shaft.

This provides for an easy production of the device and it also provides easy adjustment of the arms.

According to another aspect of the invention it is provided an adjustment of a maximal engagement angle α of the arms is enabled by means of an adjustment device

One advantage with this arrangement is that it enables to tune the angle of the arms such that they do not damage a load and at the same time provide a sufficient stop for lateral movement.

According to another aspect of the invention the adjustment device is provided in the form of a spring lockable pin that can engage with holes in a plate positioned on said load stopping device, said pin is associated to said shaft.

One advantage of this arrangement is simple adjusting of the engaging angle of the arms.

According to another aspect of the invention the adjustment device allows continuous adjustment of said engagement angle α to any angular position, by means of a friction adjusting device.

According to one aspect of the invention the said adjustment of the engaging angle is performable manually by means of a lever that acts upon the shaft carrying the arms.

According to another aspect of the invention the adjustment of the engaging angle α of the arms is motorised and controllable by an operator positioned in the operator's operating position of said truck

This is particularly advantageous if the angle needs frequently adjustment for example when the loads have many different properties.

According to another aspect of the invention the arms are divided into at least two groups and the groups are individually pivotal such that all arms in one group can have their engaging angle adjusted together

This is particularly advantageous if the loads to be carried have different shape in the lateral direction and the angle α for this reason needs to be adjusted differently on the both sides of the load holding device.

According to another aspect of the invention the arms are balanced such that they attain the engaging position by means of gravity.

This is particularly advantageous since this enables the arms to attain their engaging position automatically. And the load engaged by the forks will engage the arms that are positioned along the width occupied by the load, and in the same operation arms protruding on the sides of the load will take the role as stop or stops. And thereby the adjustment of the stop position can be performed in an automated operation. One other advantage is that it provides for a particularly simple and safe solution that is cost effective. According to another aspect of the invention the arms (3, 3a - f) are provided with a spring that enables the arms to rotate to the engaging position.

One advantage conferred by this arrangement is that it prevents oscillating of the arms, and provides for noise reduction. Another advantage is provided if the spring is combined with balanced arms in that it aids to keep arms in the engaging position if industrial truck is accelerated quickly or operated on an inclining surface.

The object of the invention is also achieved by a load stopping device with the any of the characteristics above, mounted on a provided industrial truck.

The object of the invention also includes a method of modifying an industrial truck by mounting a load stopping device with any of the characteristics described above.

### BRIEF DESCRIPTION OF THE DRAWINGS

Figure 1 Industrial truck according the one embodiment presented without load.
Figure 2 Load stopping device according to the industrial truck of figure 1.
Figure 3 Another embodiment of the invention, the industrial truck chassis has been left out intentionally.
Figure 4 Load stopping device according to the embodiment of figure 3.
Figure 5 The embodiment according to figure 3 with an example load, the industrial truck chassis has been left out intentionally.

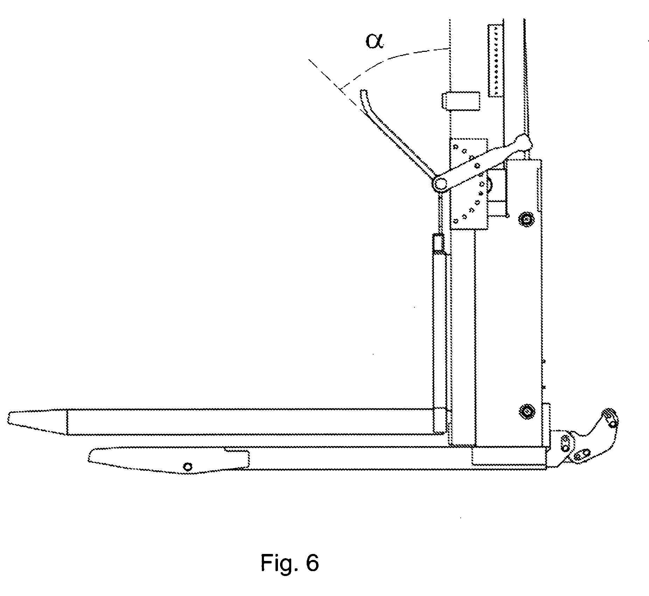

Figure 6 The embodiments of figures 1 and 3 in a side view, the industrial truck chassis has been left out intentionally.

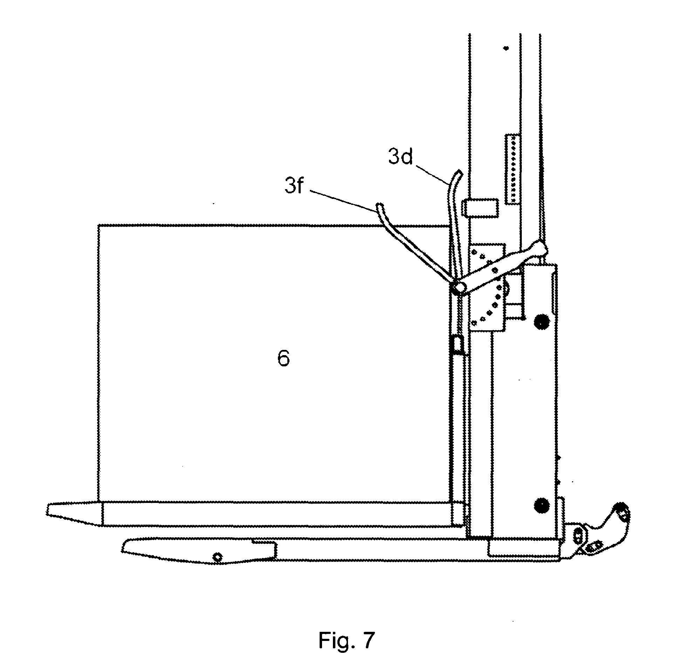

Figure 7 The embodiments of figure 1 and 3 in a side view with an example load, the industrial truck chassis has been left out intentionally.

### DETAILED DESCRIPTION

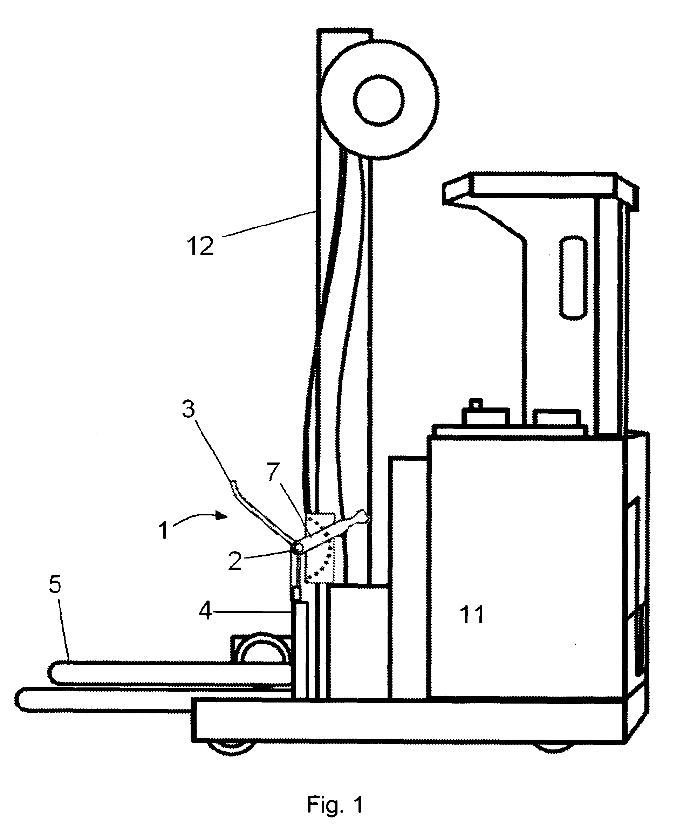

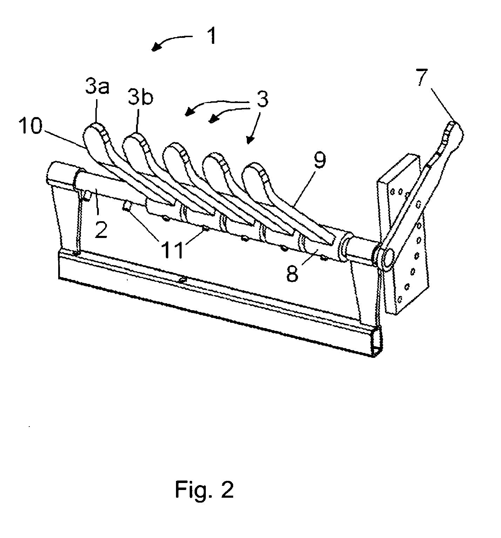

The embodiment of figure 1 and figure 2 of the industrial truck will now be explained. The industrial truck is provided with a load stopping device 1. The load stopping device 1 has a shaft 2 and at least two arms 3a, 3b mounted on the shaft 2. The device 1 is attached to the top of the back plate 4 of the forks 5. The arms 3a, 3b are placed adjacent on one extremity of the load stopping device 1. The arms 3a, 3b are balanced such that they are folded out at an angle α by means of their weight, if not placed in a storing position, see below. The arm folded to its engaging position and prevents the load from moving laterally past that arm in the lateral direction of the load. This position is defined as the stop position for the load. The storing position should be understood as an essentially vertical position, in which the arms cannot provide any lateral stop for a load 6.

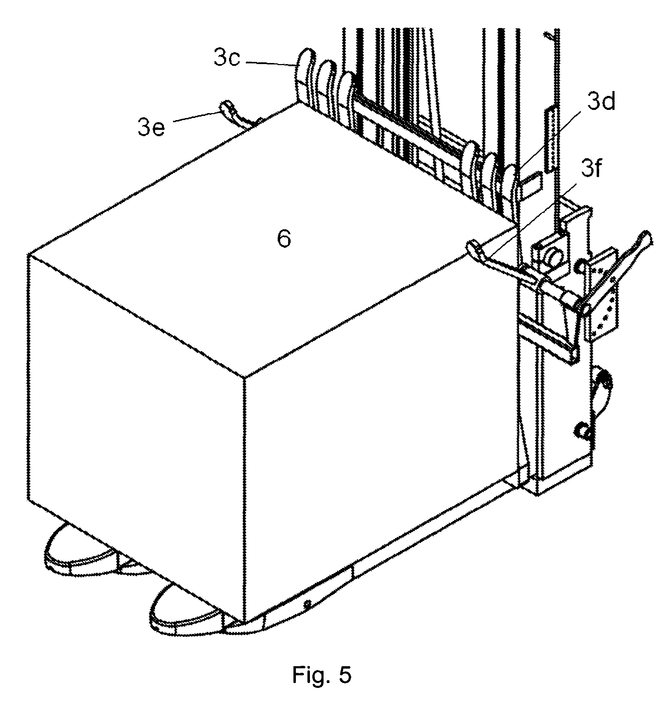

In a variant of this embodiment the angle α can be adjusted by means of a lever 7, as seen in figure 1 and 2. The lever 7 can adjust the angle α, see figure 5 such that the arms 3a, 3b will be positioned essentially vertically. This is defined as the storing position of the arms 3a, 3b. When the shaft 2 is rotated the angle α of the arms 3a, 3b is adjusted. The angle α is preferably stepwise adjustable.

When only a non adjustable lateral stop position is desired one arm 3 can be provided. In a further development of this embodiment two arms 3e 3f at the extremities of the loading device is provided, for providing a load stopping device 1 that is non adjustable but can stop a load in both lateral directions, and still carry loads that are broader than the lateral distance between the arms 3 e, 3f.

The arms 3a, 3b in the engaging position attain a predetermined angle α in respect to the vertical axis of a horizontally resting industrial truck. The angle α is preferably in an interval that is between 10 and 80 degrees, more preferably between 20 and 70 degrees and most preferably between 30 and 60 degrees.

Angles α less than 10 degrees for the engaging position, is less favourable since the stop for the load 6 becomes insufficient, which means that a load 6 is not efficiently stopped and can travel further than desired in the lateral direction. Angles α higher than 80 degrees, and comprising the angle 90 degrees can damage a carried load 6, by protrusion of the load 6 itself or for example a box carrying the load 6.

The arms 3a, 3b are provided with a foot 8 with tubular shape, from which a plate 9 extends substantially in a radial direction. Close to the extremity of the arm the plate 9 is provided with a section 10 having a curved shape such that an approaching load 6 that engages the arm is not damaged by the arm. The tubular shaped part of the arms 3a, 3b is provided with an oval opening on its periphery for providing an engagement with a pin 11 on the shaft 2. The oval opening engaging the pin 11 provides a stop at the desired angle α for the arm, and at the same time it provides the arm with the possibility to rotate on the shaft 2, in a generally known manner.

In one embodiment of the invention the fold ability of the arms 3a, 3b is controlled by springs or a spring. This is particularly advantageous where a small angle α is desired of the arms 3a, 3b. According to one further embodiment the arms can both be balanced to be folded to its engaging position by their weight together with a spring acting such that the arms attain the engaging position. This is particularly advantageous if the industrial truck is accelerated quickly or is driven at an inclined surface. It also provides a dampening of the movement of the arms such that they don't oscillate or vibrates when the industrial truck is operated, for example on a rough surface.

A particular embodiment is where the arms extend downwards from a shaft 2 being positioned at the top of the load stopping device 1. This means that the extremity of the arms is pointing downwards. This configuration is advantageous if loads with a side that has an angle in the vicinity of the arms of the embodiments described above, such that the lower part of the load would attain the fork back plate 4 and the higher part would be pointing away from the fork back plate 4.

In one particular embodiment the arms 3a, 3b are individually controllable by the operator. This is performed preferably by electrically powered arms 3a, 3b or by any other means of powering.

In one alternative embodiment the angle α of the arms 3a, 3b is not adjustable. Then the angle α is predetermined for the arms 3a, 3b folded to their engaging position. In a variant of this embodiment the arms 3a, 3b cannot be locked in the storing position, but can of course attain any angle from the engaging position until the arm is stopped from rotating any further, i.e. when it is essentially vertical. This is a particularly simple solution that also implies that the shaft 2 need not be rotatable.

The load stopping device 1 is preferably mounted on the fork back plate 4, in the preferred embodiment it is screwed on to the top of this back plate 4. However it is possible to weld it to the back plate 4 or use any other form of fixing operation.

The industrial truck of the invention, as seen in figure 1, comprising the back plate 4 can also have the load stopping device 1 positioned at other positions than on top of the back plate 4. For example on a low lifting industrial truck the load stopping device 1 can be fitted directly to the chassis 11 of the industrial truck. For a high lifting truck it is possible to fit it on the mast 12 of the industrial truck.

It is also possible to fit the device 1 lower, at the level of the upper side of the forks 5 for example, this is particularly suitable if the loads to be carried are low.

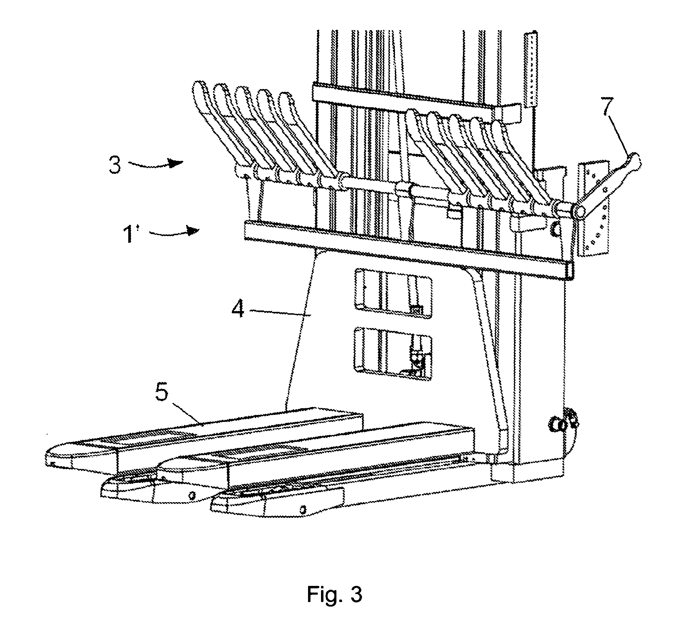

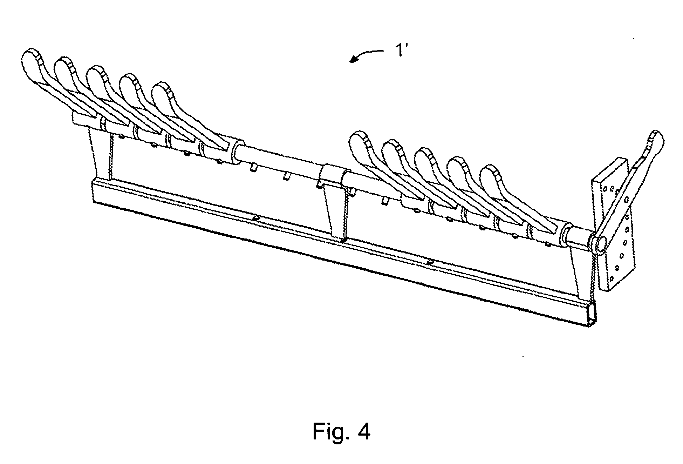

In a further embodiment as seen in figures 3, 4, 5 the load stopping device 1' comprises pluralities of arms 3. The device 1' in this embodiment can be constituted of two of the described devices 1 above with one inverted. It can also be constituted by one whole device comprising two groups of arms 3, 3 a -f, one for the left side of the load stopping device 1 and one for the right side of the load stopping device 1. A load 6 which width is narrower than the full width of the load stopping device 1 will then be blocked for lateral movement when said load 6 is positioned against the fork back plate 4. The load 6 will push the arms 3 with its side that is positioned opposite the fork back plate 4.The arms 3 that are not engaged by the same side of the load 6 will remain in the engaging position. Thereby the arms 3c, 3d that are closest to the load 6 prevent the load 6 from moving past a position where the load 6 touches the arm closest to the load 6 in the moving direction. This position is defined as the stop position for the load 6. If a load with another width is positioned against the fork back plate 4, or at least in the vicinity of it. Other arms 3e, 3f will remain in the engaging position and an adjustment of the respective stop position is performed.

In another embodiment the arms are lockable in the storing position. This is performed in a generally known manner. In yet another embodiment the arms are lockable individually in their engaging position. This is particularly advantageous when the loads that are handled have a standard size that does not alter.

A method for modifying an industrial truck is also provided. The method comprises the step of
- mounting a load stopping device 1, 1' as described above to an industrial truck
such that an industrial truck comprising a load stopping device 1, 1' as described above is provided. The method should be understood to comprise all sorts of industrial trucks. A modified embodiment of the method is:

A method for modifying an industrial truck comprising the steps of:
- providing a device 1, 1' comprising at least two pivotal arms 3 wherein the two arms 3 are positioned at one extremity of the device 1,
- arranging the arms 3 such that they can rotate between a storing position which is essentially vertical and a engaging position,
- modifying said industrial truck by mounting said device 1, 1', such that a load 6 carried by the industrial truck can engage with at least one of the arms 3 thereby providing a stop position for lateral movement of the load 6, and further such that the load 6 can push one arm 3 to its storing position and thereby providing an adjusted stop position for lateral movement.

Industrial truck is also called a fork lift truck. The definition is meant to comprise all sorts of material handling vehicles that are handling loads, by means of forks 5. There are several subcategories of industrial trucks, support legs trucks, such as reach trucks, tiller arm trucks, narrow aisle trucks, low lifting trucks as well as high lifting trucks. However, in the context of the invention industrial trucks should also embrace counter weight trucks.

## Claims

1. Industrial truck comprising a load stopping device (1, 1') comprising a first pivotal arm (3, 3a, 3c, 3d), wherein said first pivotal arm (3, 3a, 3c, 3d) is pivotal between a storing position and an engaging position, when said first pivotal arm (3, 3a, 3c, 3d) is folded to its engaging position it can protrude along the side wall of a load (6) wherein it provides a stop, at a stop position for a load movement in one lateral direction of said load stopping device wherein the first pivotal arm (3, 3a, 3c, 3d) is arranged such that it from its engaging position can be pushed by said load (6) to its storing position, **characterised in** the load stopping device (1, 1') comprising a second pivotal arm (3, 3b, 3e, 3f) with essentially the same characteristics as the first pivotal arm (3, 3a, 3c, 3d), wherein the second pivotal arm (3, 3b, 3e, 3f) is arranged laterally displaced in relation to said first pivotal arm arranged on said load stopping device, wherein said second pivotal arm (3, 3b, 3e, 3f) is arranged such that a second stop position is provided on the same side of a load (6) as the first pivotal arm's (3, 3a, 3c, 3d) stop position, wherein an adjusted stop position is enabled.

2. Industrial truck according to claim 1, wherein the load stopping device is provided with a plurality of pivotal arms (3, 3a-f) such that adjustment of the stop position in the lateral direction can be finely tuned, by enabling a plurality of stop positions.

3. Industrial truck according to claim 2, wherein the load stopping device is provided with pivotal arms (3 a - f) positioned such that a first side of the load (6) can be laterally stopped at a first stop position and a second side of the load (6), laterally distant from said first side, can be stopped at a stop position in the opposite lateral direction.

4. Industrial truck according to any of the claims 1 - 3, wherein the pivotal arms (3, 3a - f) are hinged upon a horizontal shaft (2).

5. Industrial truck according to any of the claims above, wherein an adjustment of a maximal engagement angle α of the pivotal arms (3, 3 a - f) is enabled by means of an adjustment device.

6. Industrial truck according to claim 5 and 4 wherein said adjustment device is provided in the form of a spring lockable pin that can engage with holes in a plate positioned on said load stopping device, said pin is associated to said shaft (2).

7. Industrial truck according to claim 5 wherein said adjustment device allows continuous adjustment of said engagement angle α at any angular position, by means of a friction adjusting device.

8. Industrial truck according to any of the claims 5 - 7, when dependent on claim 4, wherein said adjustment of the engaging angle α is performable manually by means of a lever (7) that acts upon the shaft (2) carrying the pivotal arms.

9. Industrial truck according to claim 5 wherein an adjustment of the engaging angle α of the pivotal arms (3, 3a -f) is motorised and controllable by an operator positioned in the operator's operating position of said truck.

10. Industrial truck according to any of the claims 5 - 9 wherein the pivotal arms (3, 3a -f) are divided into at least two groups and the groups are individually pivotal such that all pivotal arms (3, 3a -f) in one group can have their engaging angle α adjusted together.

11. Industrial truck according to any of the claims above, wherein the pivotal arms (3, 3a -f) are balanced such that they attain the engaging position by means of gravity.

12. Industrial truck according to any of the claims above wherein the pivotal arms (3, 3a - f) are provided with a spring that enables the pivotal arms to rotate to the engaging position.

13. Load stopping device (1) provided with pivotal arms (3, 3a -f) such that when mounted on an industrial truck it provides an industrial truck according to any of the claims 1 - 12.

14. Method of modifying an industrial truck comprising the steps of
- mounting a load stopping device (1) according to claim 13 to an industrial truck,
wherein an industrial truck according to any of the claims 1 -12 is obtained.

## Patentansprüche

1. Flurförderer mit einer Laststoppeinrichtung (1, 1'), die einen ersten Schwenkarm (3, 3a, 3c, 3b) aufweist, wobei der erste Schwenkarm (3, 3a, 3c, 3d) zwischen einer Lagerungsposition und einer Eingriffsposition verschwenkbar ist, wobei der erste Schwenkarm (3, 3a, 3c, 3d), wenn er in seine Eingriffsposition gefaltet wird, entlang der Seitenwand einer Last (6) hervorstehen kann, wobei er bei einer Stoppposition für eine Lastbewegung in einer Querrichtung der Laststoppeinrichtung einen Stopp verursacht, wobei der erste Schwenkarm (3, 3a, 3c, 3d) so ausgebildet ist, dass er durch die Last (6) aus seiner Eingriffsposition in seine Lagerposition gedrückt werden kann, **dadurch gekennzeichnet, dass** die Laststoppeinrichtung (1, 1') einen zweiten Schwenkarm (3, 3b, 3e, 3f) mit im Wesentlichen denselben Merkmalen wie der erste Schwenkarm (3, 3a, 3c, 3d) aufweist, wobei der zweite Schwenkarm (3, 3b, 3e, 3f) in Bezug auf den ersten Schwenkarm, der auf der Laststoppeinrichtung angeordnet ist, seitlich versetzt angeordnet ist, wobei der zweite Schwenkarm (3, 3b, 3e, 3f) so ausgebildet ist, dass eine zweite Stoppposition an derselben Seite einer Last (6) wie die Stoppposition des ersten Schwenkarms (3, 3a, 3c, 3b) vorgesehen ist, wobei eine angepasste Stoppposition ermöglicht ist.

2. Flurförderer nach Anspruch 1, bei dem die Laststoppeinrichtung mit einer Vielzahl von schwenkbaren Armen (3, 3a-f) versehen ist, so dass eine Einstellung der Stoppposition in der Querrichtung fein abgestimmt werden kann, indem eine Vielzahl an Stopppositionen ermöglicht sind.

3. Flurförderer nach Anspruch 2, bei dem die Laststoppeinrichtung mit schwenkbaren Armen (3a-f) versehen ist, die so positioniert sind, dass eine erste Seite der Last (6) bei einer ersten Stoppposition seitlich gestoppt werden kann, und eine zweite Seite der Last (6), die zu der ersten Seite seitlich beabstandet ist, bei einer Stoppposition in der entgegengesetzten Querrichtung gestoppt werden kann.

4. Flurförderer nach einem der Ansprüche 1-3, bei dem die schwenkbaren Arme (3, 3a-f) auf einer horizontalen Welle (2) angelenkt sind.

5. Flurförderer nach einem der vorstehenden Ansprüche, bei dem eine Einstellung eines maximalen Eingriffswinkels α der Schwenkarme (3, 3a-f) mittels einer Einstelleinrichtung ermöglicht wird.

6. Flurförderer nach Anspruch 4 und 5, bei dem die Einstelleinrichtung in der Form eines Federarretierstifts vorgesehen ist, der mit Löchern in einer an der Laststoppeinrichtung positionierten Platte in Eingriff stehen kann, wobei der Stift mit der Welle (2) assoziiert ist.

7. Flurförderer nach Anspruch 5, bei dem die Einstelleinrichtung mittels einer Reibungseinstelleinrichtung bei jeder Winkelposition eine kontinuierliche Einstellung des Eingriffswinkels α erlaubt.

8. Flurförderer nach einem der Ansprüche 5-7, wenn von Anspruch 4 abhängig, bei dem die Einstellung des Eingriffswinkels α mittels eines Hebels (7), der auf die Welle (2) wirkt, welche die Schwenkarme trägt, manuell ausgeführt werden kann.

9. Flurförderer nach Anspruch 5, bei dem eine Einstellung des Eingriffswinkels α der Schwenkarme (3, 3a-f) motorisiert und durch eine Bedienperson steuerbar ist, die in der Bedienposition der Bedienperson des Förderers positioniert ist.

10. Flurförderer nach einem der Ansprüche 5-9, bei dem die Schwenkarme (3, 3a-f) in mindestens zwei Gruppen eingeteilt sind, und die Gruppen individuell verschwenkbar sind, so dass die Eingriffswinkel α aller Schwenkarme (3, 3a-f) in einer Gruppe gemeinsam einstellbar sind.

11. Flurförderer nach einem der vorstehenden Ansprüche, bei dem die Schwenkarme (3, 3a-f) so ausbalanciert sind, dass sie die Eingriffsposition infolge der Schwerkraft einnehmen.

12. Flurförderer nach einem der vorstehenden Ansprüche, bei dem die Schwenkarme (3, 3a-f) mit einer Feder versehen sind, die es den Schwenkarmen ermöglicht, in ihre Eingriffsposition zu drehen.

13. Laststoppeinrichtung (1), die mit Schwenkarmen (3, 3a-f) versehen ist, so dass diese, wenn sie an einem Flurförderer angebracht ist, einen Flurförderer nach einem der Ansprüche 1-12 bereitstellt.

14. Verfahren zum Modifizieren eines Flurförderers, das die Schritte umfasst:
- Anordnen einer Laststoppeinrichtung (1) nach Anspruch 13 an einem Flurförderer,
wobei ein Flurförderer nach einem der Ansprüche 1-12 erzeugt wird.

## Revendications

1. Chariot de manutention comprenant un dispositif d'arrêt de charge (1, 1') qui comprend un premier bras pivotant (3, 3a, 3c, 3d), dans lequel ledit premier bras pivotant (3, 3a, 3c, 3d) peut pivoter entre une position rangée et une position de mise en prise, lorsque ledit premier bras pivotant (3, 3a, 3c, 3d) est replié dans sa position de mise en prise, il peut faire saillie le long de la paroi latérale d'une charge (6), dans lequel il fournit un arrêt, au niveau d'une position d'arrêt pour un déplacement de charge dans une direction latérale dudit dispositif d'arrêt de charge, dans lequel le premier bras pivotant (3, 3a, 3c, 3d) est agencé de telle sorte qu'il puisse être poussé par ladite charge (6) à partir de sa position de mise en prise vers sa position rangée, **caractérisé en ce que** le dispositif d'arrêt de charge (1, 1') comprend un second bras pivotant (3, 3b, 3e, 3f) qui présente sensiblement les mêmes caractéristiques que le premier bras pivotant (3, 3a, 3c, 3d), dans lequel le second bras pivotant (3, 3b, 3e, 3f) est agencé déplacé de manière latérale par rapport audit premier bras pivotant agencé sur ledit dispositif d'arrêt de charge, dans lequel ledit second bras pivotant (3, 3b, 3e, 3f) est agencé de telle sorte qu'une seconde position d'arrêt soit prévue sur le même côté d'une charge (6) que la position d'arrêt du premier bras pivotant (3, 3a, 3c, 3d), dans lequel une position d'arrêt réglée est permise.

2. Chariot de manutention selon la revendication 1, dans lequel le dispositif d'arrêt de charge est doté d'une pluralité de bras pivotants (3, 3a-f) de telle sorte que le réglage de la position d'arrêt dans la direction latérale puisse être réglé de manière précise, en permettant une pluralité de positions d'arrêt.

3. Chariot de manutention selon la revendication 2, dans lequel le dispositif d'arrêt de charge est doté de bras pivotants (3, 3a-f) positionnés de telle sorte qu'un premier côté de la charge (6) puisse être arrêté de manière latérale au niveau d'une première position d'arrêt, et qu'un second côté de la charge (6), distant de manière latérale dudit premier côté, puisse être arrêté au niveau d'une position d'arrêt dans la direction latérale opposée.

4. Chariot de manutention selon l'une quelconque des revendications 1 à 3, dans lequel les bras pivotants (3, 3a-f) sont articulés autour d'un axe horizontal (2).

5. Chariot de manutention selon l'une quelconque des revendications précédentes, dans lequel un réglage d'un angle de mise en prise maximal α des bras pivotants (3, 3a-f) est possible grâce à un dispositif de réglage.

6. Chariot de manutention selon la revendication 5 et 4, dans lequel ledit dispositif de réglage est fourni sous la forme d'une broche pouvant être verrouillée par ressort, qui peut venir en prise dans des trous situés dans une plaque positionnée sur ledit dispositif d'arrêt de charge, ladite broche étant associée audit axe (2).

7. Chariot de manutention selon la revendication 5, dans lequel ledit dispositif de réglage permet un réglage continu dudit angle de mise en prise α selon n'importe quelle position angulaire, à l'aide d'un dispositif de réglage par frottement.

8. Chariot de manutention selon l'une quelconque des revendications 5 à 7 lorsqu'elle dépend de la revendication 4, dans lequel ledit réglage de l'angle de mise en prise α peut être exécuté manuellement au moyen d'un levier (7) qui agit sur l'axe (2) portant les bras pivotants.

9. Chariot de manutention selon la revendication 5, dans lequel un réglage de l'angle de mise en prise α des bras pivotants (3, 3a-f) est motorisé et peut être commandé par un opérateur positionné dans la position de travail de l'opérateur dudit chariot.

10. Chariot de manutention selon l'une quelconque des revendications 5 à 9, dans lequel les bras pivotants (3, 3α-f) sont divisés en deux groupes au moins et les groupes peuvent pivoter individuellement de telle sorte qu'il soit possible de régler l'angle de mise en prise α de tous les bras pivotants (3, 3α-f) ensemble dans un groupe.

11. Chariot de manutention selon l'une quelconque des revendications précédentes, dans lequel les bras pivotants (3, 3α-f) sont équilibrés de telle sorte qu'ils atteignent la position de mise en prise grâce à la pesanteur.

12. Chariot de manutention selon l'une quelconque des revendications précédentes, dans lequel les bras pivotants (3, 3α-f) sont dotés d'un ressort qui permet aux bras pivotants de tourner vers la position de mise en prise.

13. Dispositif d'arrêt de charge (1) doté de bras pivotants (3, 3α-f) de telle sorte que l'on obtienne, quand il est monté sur un chariot de manutention, un chariot de manutention selon l'une quelconque des revendications 1 à 12.

14. Procédé destiné à modifier un chariot de manutention comprenant les étapes consistant à :
- monter sur un chariot de manutention un dispositif d'arrêt de charge (1) selon la revendication 13 ;
dans lequel on obtient un chariot de manutention selon l'une quelconque des revendications 1 à 12.
